# FASCICULE DE BREVET EUROPEEN

(11) **EP 1 102 811 B1**
(45) Date de publication et mention de la délivrance du brevet: **04.08.2004**
(21) Numéro de dépôt: 00934978.8
(22) Date de dépôt: 03.05.2000
(51) Int. Cl.: C08K 5/098, C08L 21/00, B60C 1/00

(54) **PRODUIT A BASE DE CAOUTCHOUC, SON PROCEDE D'OBTENTION, PNEUMATIQUE CONSTITUE PAR CE PRODUIT ET PROCEDE POUR REDUIRE LA RESISTANCE AU ROULEMENT DE CE PNEUMATIQUE**
PRODUKT AUF BASIS VON KAUTSCHUK, VERFAHREN ZU SEINER HERSTELLUNG, REIFEN UND VERFAHREN ZUR VERRINGERUNG DES ROLLWIDERSTANDES VON DIESEM REIFEN
RUBBER-BASED PRODUCT, METHOD FOR PRODUCING SAME, TYRE MADE FROM SAID PRODUCT TO REDUCE SAID TYRE ROLLING RESISTANCE

(30) Priorité: 07.05.1999 FR 9905892
(43) Date de publication de la demande: 30.05.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: PAGANO, Salvatore, 63100 Clermont-Ferrand (FR); DUMERGUE, Lucette, 63360 St-Beauzire (FR); PORNET, Emmanuelle, 63200 Riom (FR)
(74) Mandataire: Hiebel, Robert
(86) Numéro de dépôt international: PCT/EP2000/003944
(87) Numéro de publication internationale: WO 2000/068309

(56) Documents cités:
- EP-A- 0 713 899
- WO-A-99/24502
- CHEMICAL ABSTRACTS, vol. 82, no. 8, 24 février 1975 (1975-02-24) Columbus, Ohio, US; abstract no. 44700, XP002065869 & JP 04 900430 B (SUMITOMO CHEMICAL COMPANY) 31 janvier 1974 (1974-01-31)

## Description

La présente invention concerne un produit à base de caoutchouc, son procédé d'obtention, un pneumatique constitué dudit produit et un procédé pour réduire la résistance au roulement dudit pneumatique.

Une des préoccupations principales des manufacturiers de pneumatiques est d'augmenter la durée de vie de ceux-ci. En particulier il importe d'améliorer l'endurance, vis-à-vis des processus oxydants, des compositions de caoutchouc, des renforts métalliques ou textiles et des interfaces entre ces mélanges et ces renforts.

Un procédé connu pour réduire ces phénomènes d'oxydation consiste à limiter la quantité d'oxygène arrivant dans une zone de l'enveloppe particulièrement sensible à l'oxydation, en provenance de l'air de gonflage ou de l'air extérieur. C'est ainsi que l'on utilise depuis très longtemps une couche de caoutchouc butyl, imperméable à l'oxygène, contre la paroi interne des enveloppes. Malheureusement, l'imperméabilité du caoutchouc butyl n'est pas totale et le flux d'oxygène, même réduit, qui passe dans la masse de l'enveloppe produit à la longue les phénomènes indésirables d'oxydation.

D'autres matériaux encore plus étanches que le caoutchouc butyl ont été proposés dans ce but, comme décrit par exemple dans les documents US-A-5 236 030, US-A-4 874 670, US-A-5 036 113, EP-A-337 279, US-A-5 040 583 et US-A-5 156 921. Cependant ces matériaux sont coûteux et leur mise en oeuvre dans les enveloppes pose de multiples problèmes.

Un autre procédé pour éviter les problèmes d'oxydation consiste à piéger chimiquement l'oxygène par thermo-oxydation accélérée d'une composition de caoutchouc servant de tampon, disposée entre une source principale d'oxygène et la zone que l'on veut protéger contre les phénomènes d'oxydation. A titre d'exemple, une telle composition tampon peut être localisée entre la face interne de l'enveloppe, éventuellement revêtue de caoutchouc butyl, et la nappe carcasse pour diminuer la quantité d'oxygène qui arrive au contact de cette nappe en provenance de l'air de gonflage, en particulier dans les enveloppes destinées à être montées sur des véhicules poids lourds.

Pour accélérer la fixation de l'oxygène, il est connu d'utiliser dans ces compositions tampon un sel métallique qui catalyse l'oxydation, en particulier un sel de cobalt. Ce sel a pour effet d'activer la décomposition homolytique des hydroperoxydes générés lors du vieillissement provoqué par les phénomènes d'oxydation précités. Ce sel est introduit de préférence dans une quantité de 0,2 à 0,3 partie en poids en équivalent cobalt pour 100 parties en poids de l'élastomère dans la composition tampon. On augmente ainsi de 50 à 100 % environ la quantité d'oxygène qui peut être piégée par cette composition tampon, par rapport à la même composition dépourvue de sel de cobalt.

Malheureusement, l'expérience montre que cette amélioration du comportement vis-à-vis de l'oxydation s'accompagne d'une augmentation importante des pertes hystérétiques de la composition tampon par suite de la quantité notable de sel de cobalt introduite. Cette augmentation des pertes hystérétiques conduit d'une part à un auto-échauffement de la composition, d'où une durée de vie diminuée, ce qui est en opposition avec le but recherché, et à une augmentation de la résistance au roulement, ce qui est également à éviter car le but des manufacturiers est de limiter autant que possible la résistance au roulement pour diminuer la consommation de carburant.

Pour ces raisons, l'utilisation de compositions tampons, aussi séduisante soit elle, n'a pas eu le développement que l'on attendait.

Le document de brevet européen EP-A-507 207 décrit une méthode pour piéger de l'oxygène au moyen d'une composition tampon élastomérique, laquelle est contenue dans une couche d'un emballage. Cette composition tampon est notamment caractérisée par la présence d'un sel de métal de transition prévu pour activer la fixation d'oxygène. Comme exposé ci-dessus, les sels métalliques qui sont décrits à titre préférentiel sont des sels de cobalt. A titre subsidiaire, d'autres métaux tels que le manganèse, voire le fer sont également envisagés, mais pas en relation avec des sels spécifiés.

La demanderesse a trouvé de façon inattendue que les inconvénients précités pouvaient être fortement réduits en utilisant des sels de fer spécifiques au lieu de sels de cobalt dans ces compositions tampons, ceci pour l'obtention d'un produit à base de caoutchouc, du type comportant au moins une zone tampon prévue pour piéger l'oxygène extérieur audit produit en vue de protéger de l'oxydation au moins une zone sensible dudit produit, ladite ou chaque zone tampon contenant une composition à base d'au moins un élastomère qui comprend au moins un sel de fer (III) prévu pour activer l'oxydation dans ladite composition.

Plus précisément, un produit selon l'invention est tel que ledit sel est un sel de fer (III) d'un acide carboxylique répondant à la formule brute CₙH₂ₙO₂, où n peut aller de 2 à 5.

A titre particulièrement avantageux, ledit sel est le pentanoate de fer (III) ou l'acétate de fer (III).

De préférence, la quantité dudit sel de fer (III) selon l'invention dans la composition peut aller de 0,01 à 0,03 pce d'équivalent fer, l'abréviation "pce" signifiant partie en poids pour 100 parties en poids de l'élastomère ou de l'ensemble des élastomères présents dans la composition. A titre encore plus préférentiel; cette quantité du sel de fer (III) selon l'invention varie de 0,01 à 0,02 pce d'équivalent fer.

La composition conforme à l'invention est à base de caoutchouc naturel ou synthétique, ou d'un coupage de deux ou plusieurs de ces caoutchoucs. Des exemples de caoutchoucs synthétiques susceptibles d'être mis en oeuvre dans la composition conforme à l'invention sont les caoutchoucs diéniques tels que le polyisoprène, le polybutadiène, les caoutchoucs mono-oléfiniques tels que le polychloroprène, le polyisobutylène, les copolymères styrène-butadiène ou styrène-butadiène-isoprène, les copolymères acrylonitrile-butadiéne-styréne et les terpolymères éthylène-propylène-diène. Parmi les caoutchoucs synthétiques, les caoutchoucs diéniques sont préférés, en particulier tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatique ayant de 8 à 20 atomes de carbone.

A titre de diènes conjugués, conviennent notamment le butadiène-1,3, le méthyl-2 butadiène-1,3, les 2,3-di(afcoyle en C1 à C5) butadiène-1,3 tels que par exemple le diméthyl-2,3, diéthyl-2,3 butadiène-1,3, méthyl-2 éthyl-3 butadiène-1,3, le méthyl-2 isopropyl-3 butadiène-1,3, le phényl butadiène-1,3, le pentadiène-1,3, l'hexadiène-2,4.

A titre de composés vinylaromatiques conviennent notamment le styrène, l'ortho, méta, para-méthylstyrène, le mélange commercial "vinyle-toluène", le para-tertiobutyl styrène, les méthoxystyrènes, les chlorostyrènes, le vinylmésitylène, le divinyl benzène, le vinylnaphtalène, etc.

Les copolymères peuvent contenir par exemple entre 99 % et 20 % en poids d'unités diéniques et de 1 % à 80 % en poids d'unités vinyle aromatiques.

Les polymères peuvent avoir toute microstructure qui est fonction des conditions de polymérisation utilisées, notamment de la présence ou non d'un agent modifiant et/ou randomisant et des quantités d'agent modifiant ou randomisant employées. Les polymères peuvent être à blocs, statistiques, séquencés, microséquencés, etc. et préparés en dispersion ou en solution.

A titre préférentiel de caoutchoucs synthétiques diéniques conviennent les polybutadiènes et en particulier ceux ayant une teneur en unités -1,2 comprise entre 4 % et 80 % et ceux ayant plus de 90 % de liaisons cis-1,4, les polyisoprènes, les copolymères de butadiène-styrène et en particulier ceux ayant une teneur en styrène comprise entre 5 % et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %, ceux ayant une teneur globale en composé aromatique comprise entre 5 % et 50 % et une température de transition vitreuse (Tg) comprise entre 0 °C et - 80 °C et particulièrement ceux ayant une teneur en styrène comprise entre 25 % et 30 % en poids, une teneur en liaisons vinyliques de la partie butadiénique comprise entre 55 % et 65 %, une teneur en liaisons trans-1,4 comprise entre 20 % et 25 % et une température de transition vitreuse comprise entre - 20 °C et - 30 °C.

Dans le cas de copolymères de butadiène-styrène-isoprène conviennent ceux ayant une teneur en styrène comprise entre 5 % et 50 % et plus particulièrement comprise entre 10 % et 40 %, une teneur en isoprène comprise entre 15 % et 60 % en poids et plus particulièrement comprise entre 20 % et 50 % en poids, une teneur en butadiène comprise entre 5 % et 50 % et plus particulièrement comprise entre 20 % et 40 % en poids, une teneur en unités -1,2 de la partie butadiénique comprise entre 4 % et 85 %, une teneur en unités trans-1,4 de la partie butadiénique comprise entre 6 % et 80 %, une teneur en unités -1,2 plus -3,4 de la partie isoprénique comprise entre 5 % et 70 % et une teneur en unités trans- 1,4 de la partie isoprénique comprise entre 10 % et 50%.

Les caoutchoucs synthétiques peuvent être couplés et/ou étoilés ou encore fonctionnalisés avec un agent de couplage et/ou d'étoilage ou de fonctionnalisation.

Ces caoutchoucs peuvent être vulcanisés et/ou réticulés par tous les agents connus tels que le soufre, les peroxydes, les bismaléimides, etc.

La composition conforme à l'invention comporte les charges et additifs habituels comme par exemple du noir de carbone, de la silice ou toute autre charge blanche renforçante, de l'acide stéarique, des résines renforçantes, de l'oxyde de zinc, des activateurs, des pigments, des accélérateurs ou des retardateurs de vulcanisation, des agents contre le vieillissement tels que des agents anti-oxydants, des agents anti-réversion, des huiles ou divers agents de mise en oeuvre, des résines tackifiantes, des promoteurs d'adhésion sur métal, des cires anti-ozonantes, des agents de liaison et/ou de recouvrement de la silice, etc.

Les compositions conformes à l'invention peuvent être utilisées dans des applications très diverses, et pour de nombreux produits caoutchouteux notamment, par exemple dans les enveloppes de pneumatiques, comme compositions tampons entre une source d'oxygène, notamment l'air de gonflage ou l'air extérieur, et une zone à protéger dans l'enveloppe. A titre d'exemple, ces compositions peuvent être utilisées à l'intérieur de la gomme intérieure, entre la gomme intérieure et la nappe carcasse, entre la nappe carcasse et les nappes sommet, entre les nappes sommet et la bande de roulement, entre la nappe carcasse et le flanc, voire à l'extérieur du flanc.

Une enveloppe de pneumatique selon l'invention, ladite enveloppe étant du type comportant une gomme intérieure, une nappe carcasse s'étendant de tringle à tringle, des nappes sommet, des flancs se terminant par des bourrelets comportant au moins une tringle et une bande de roulement, est caractérisée en ce que ladite ou chaque zone tampon contenant ladite composition occupe au moins l'une des positions suivantes:
radialement à l'intérieur de ladite gomme intérieure, entre ladite gomme intérieure et ladite nappe carcasse, entre ladite nappe carcasse et lesdites nappes sommet, entre lesdites nappes sommet et ladite bande de roulement, entre ladite nappe carcasse et lesdits flancs, dans ou à l'extérieur desdits flancs, dans ou à l'extérieur de ladite bande de roulement.

L'utilisation du composé de fer conforme à l'invention est très différente des utilisations connues de composés de fer dans l'industrie des caoutchoucs, comme par exemple l'utilisation connue de sels oxydants pour favoriser la mastication des caoutchoucs (propriétés peptisantes) ou la dévulcanisation pour recyclage, ces applications étant par exemple décrites dans les documents US-A-3 324 100, EP-A-157 079 et RU-A-2 014 339.

Concernant le procédé d'obtention d'un produit à base de caoutchouc selon la présente invention, il consiste à incorporer par travail mécanique ledit sel de fer (III) à l'élastomère ou aux élastomères que comprend la composition tampon, pour l'obtention de la zone tampon correspondante.

Selon une autre caractéristique de ce procédé, il consiste à incorporer audit ou auxdits élastomères ledit sel de fer (III) en même temps qu'une charge prévue pour renforcer ladite composition.

Concernant le procédé selon la présente invention pour réduire la résistance au roulement d'une enveloppe de pneumatique, il consiste à incorporer par travail mécanique, à un ou à des élastomères constituant ladite enveloppe, un sel de fer (III) tel que défini ci-dessus.

L'invention sera aisément comprise à l'aide des exemples non limitatifs qui suivent.

Ces exemples sont soit des exemples conformes à l'invention, soit des exemples non conformes à l'invention utilisant des compositions sans dérivé métallique, ou bien comprenant des sels de cobalt ou encore des sels de fer (III) ne répondant pas à la formule précitée de l'invention.

L'efficacité pro-oxydante des composés de fer ou de cobalt est évaluée en faisant subir aux compositions un vieillissement thermo-oxydant. On mesure ensuite la prise d'oxygène par analyse élémentaire et on détermine l'évolution des propriétés mécaniques comme le module, la perte hystérétique et les propriétés de rupture.

Les tests sont réalisés dans les conditions suivantes.

### Vulcanisation

Sauf indication différente, tous les essais sont réalisés sur des échantillons vulcanisés par cuisson de 20 à 30 minutes à 150°C.

### Vieillissement thermo-oxydant

On utilise une étuve ventilée à la température de 85 °C. Cette température est considérée comme représentative des régimes thermiques lors du fonctionnement d'enveloppes de pneumatiques.

### Perte hystérétique

La mesure de perte hystérétique, ou hystérèse, (Ph) est une perte d'énergie à 60 °C par rebond à énergie imposée mesurée au sixième choc. La valeur, exprimée en %, est la différence entre l'énergie fournie et l'énergie restituée, rapportée à l'énergie fournie. La déformation pour les pertes mesurées est de 40 %.

### Essais de traction

On mesure les modules d'allongement à 10 % d'allongement (M 10) et 100 % d'allongement (M100) conformément à la norme ISO 37.

### Indices de cassage Scott

On mesure également les contraintes à la rupture (Cr) en MPa et les allongements à la rupture (Ar) en %. Toutes ces mesures de traction sont effectuées dans les conditions normales de température et d'hygrométrie selon la norme ISO 37.

### EXEMPLES

Dans les deux exemples qui suivent on utilise la composition de base suivante qui est réalisée comme connue en soi dans un mélangeur interne puis sur un mélangeur externe, tous les chiffres indiqués étant des parties en poids et étant précisé que le sel de fer (III) est introduit au mélangeur interne, par exemple un Banburry, en même temps que le noir, ZnO, l'acide stéarique et la 6PPD.

| | |
|---|---|
| Caoutchouc naturel | 100 |
| Noir de carbone N326 | 47 |
| Soufre | 4,5 |
| DCBS | 0,8 |
| ZnO | 7,5 |
| Acide stéarique | 0,9 |
| 6PPD | 1,5 |

- DCBS :: N,N-dicyclohexyl-2-benzotiazolesulfénamide
- 6PPD :: N-1,3-diméthylbutyl-N'-phényl-paraphénylènediamine.

A partir de cette composition de base on prépare les compositions suivantes, pour chacun des deux exemples de réalisation suivants.

### Exemple 1:

### Compositions témoins:

◇ Composition T1 : composition de base sans dérivé métallique.
◇ Composition T2 : composition de base comportant en outre 0,25 pce, en équivalent de cobalt, de naphténate de cobalt.
◇ Composition T3 : composition de base comportant en outre 0,02 pce, en équivalent de fer, d'acétylacétonate ferrique.

### Composition préférentielle conforme à l'invention:

◇ Composition II: composition de base comportant en outre 0,02 pce, en équivalent de fer, d'acétate de fer (III).

Concernant la vulcanisation précitée à 150° C, on notera que la durée de celle-ci est de 20 min. pour ladite composition témoin T2, alors qu'elle est de 30 min. pour les autres compositions.
2-a) On a déterminé avec ces compositions les modules d'allongement M10 et M100, ainsi que les pertes hystérétiques (ou hystérèse). Les résultats sont donnés dans le tableau 1 qui suit.

**Tableau 1:**

| | T1 | T2 | T3 | **I1** |
|---|---|---|---|---|
| M10 (MPa) | 4,5 | 5,8 | 4,5 | **4,5** |
| M100 (MPa) | 2,2 | 2,6 | 2,3 | **2,3** |
| Ph (%) | 17 | 19 | 16,5 | **16,5** |

Ce tableau 1 montre que le sel de fer (III) d'acide acétique, dans la composition I1 conforme à l'invention, modifie moins les caractéristiques de la composition de base que ne le fait le naphténate de cobalt dans la composition témoin T2, et que la perte hystérétique relative à cette composition I1 est notablement plus réduite que celle de ladite composition témoin T2.
2-b) On a cherché à montrer l'aptitude de la composition I1 à fixer de l'oxygène, après une durée de thermo-oxydation de 2 semaines à 85°C, en la comparant aux compositions témoins T1, T2 et T3.
Les résultats de ces essais de thermo-oxydation figurent dans le tableau 2 suivant qui donne le % en poids d'oxygène fixé.

**Tableau 2:**

| | T1 | T2 | T3 | **I1** |
|---|---|---|---|---|
| A 85°C 2 semaines | 0,8 | 1,1 | 1,4 | **1,3** |

Le tableau 2 montre que le sel de fer (III) d'acide acétique permet une fixation d'oxygène par la composition I1 qui est supérieure à celle obtenue avec la composition témoin T2 comprenant le naphténate de cobalt, cette fixation étant notablement plus élevée par rapport à celle de la composition témoin T1 dépourvue de composé de fer ou de cobalt.
Des compositions de base comportant d'autres sels métalliques décrits comme pro-oxydants dans la littérature introduits en quantité telle que l'on est à isomole de métal par rapport à la composition témoin T2, tels que les sels de manganèse II ou III et notamment le carbonate, l'acétate, l'acétylacétonate de manganèse (II), l'acétylacétonate de manganèse (III), les sels de molybdène (IV) et notamment le sulfure et l'oxyde de molybdène (IV), les sels de cuivre (II) et notamment l'hydroxyde, le carbonate, le stéarate, l'acétate, l'acétyl acétonate de cuivre (II), les sels de chrome (III) et notamment l'acétylacétonate de chrome, le sulfate de cérium (IV), conduisent à des résultats similaires à ceux obtenus avec la composition témoin T qui est dépourvue de sel métallique.
2-c) On a cherché par ailleurs à déterminer les modules et les propriétés à la rupture, ainsi que l'hystérèse de la composition I1 conforme à l'invention en comparaison des compositions témoin T1, T2 et T3, cela après voir appliqué à chaque composition le traitement précité de vieillissement par thermo-oxydation (à une température de 85° C pendant 2 semaines).
Les résultats sont donnés dans le tableau 3 suivant qui montre, pour chaque composition, l'évolution des valeurs des différents paramètres par rapport à celles de la même composition avant ce traitement thermo-oxydant.

**Tableau 3:**

| | T1 | T2 | T3 | **I1** |
|---|---|---|---|---|
| M10 | +60 % | +55% | 61 % | **+56%** |
| M100 | 122 % | +111 % | - | **-** |
| Ph | +5,5 | +11 | +8 | **+8** |
| Ar | -71 % | -78% | -85 % | **-80 %** |
| Cr | -63 % | -71 % | -77 % | **-73%** |

En relation avec les résultats du paragraphe 2-b), ce tableau 3 montre que la composition I selon l'invention présente une aptitude à la fixation d'oxygène qui est nettement améliorée par rapport à ladite composition connue T2 tout en présentant, suite au traitement thermo-oxydant, des propriétés mécaniques d'allongement et de rupture qui ont évolué dans une mesure pratiquement analogue après traitement thermo-oxydant.

### Exemple 2:

### Compositions témoins:

◇ Composition T1 : composition de base sans dérivé métallique.
◇ Composition T2 : composition de base comportant en outre 0,25 pce, en équivalent cobalt, de naphténate de cobalt.
◇ Composition T3 : composition de base comportant en outre 0,25 pce, en équivalent fer, de fumarate de fer (III).
◇ Composition T4 : composition de base comportant en outre 0,25 pce, en équivalent fer, de gluconate de fer (III).
◇ Composition T5 : composition de base comportant en outre 0,25 pce, en équivalent fer, de citrate de fer (III).

### Composition préférentielle conforme à l'invention :

◇ Composition 12: composition de base comportant en outre 0,02 pce, en équivalent de fer, de pentanoate de fer (III).

Concernant la vulcanisation précitée à 150° C, on notera que la durée de celle-ci est de 20 min. pour ladite composition témoin T2, alors qu'elle est de 30 min. pour les autres compositions.
2-a) On a déterminé avec ces compositions les modules d'allongement M10 et M100, ainsi que les pertes hystérétiques (ou hystérèse). Les résultats sont donnés dans le tableau 4 qui suit.

**Tableau 4:**

| | T1 | T2 | **I2** |
|---|---|---|---|
| M10 (MPa) | 4,5 | 5,5 | **4,2** |
| M100 (MPa) | 2,2 | 2,4 | **2,2** |
| Ph (%) | 15,7 | 19,2 | **15,6** |

Ce tableau 4 montre que le sel de fer (III) d'acide pentanoïque, dans la composition I2 conforme à l'invention, modifie moins les caractéristiques de la composition de base que ne le fait le composé de cobalt dans la composition témoin T2, et que la perte hystérétique relative à cette composition I2 est notablement plus réduite que celle de ladite composition témoin T2.
2-b) On a cherché à montrer l'aptitude de la composition 12 à fixer de l'oxygène, après une durée de thermo-oxydation de 2 semaines à 85°C, en la comparant aux compositions témoins T1 et T2.
Les résultats de ces essais de thermo-oxydation figurent dans le tableau 5 suivant qui donne le % en poids d'oxygène fixé.

**Tableau 5:**

| | T1 | T2 | **I2** |
|---|---|---|---|
| A 85°C 2 semaines | 0,9 | 1,1 | **1,4** |

Le tableau 5 montre que le sel de fer (III) selon l'invention permet une fixation d'oxygène par la composition I2 qui est supérieure à celle obtenue avec la composition témoin T2 au cobalt, cette fixation étant notablement plus élévée par rapport à celle de la composition témoin T1 dépourvue de composé de fer ou de cobalt.
Des compositions de base comportant d'autres sels métalliques décrits comme pro-oxydants dans la littérature introduits en quantité telle que l'on est à isomole de métal par rapport à la composition témoin T2, tels que les sels de manganèse II ou III et notamment le carbonate, l'acétate, l'acétylacétonate de manganèse (II), l'acétylacétonate de manganèse (III), les sels de molybdène (IV) et notamment le sulfure et l'oxyde de molybdène (IV), les sels de cuivre (II) et notamment l'hydroxyde, le carbonate, le stéarate, l'acétate, l'acétyl acétonate de cuivre (II), les sels de chrome (III) et notamment l'acétylacétonate de chrome, le sulfate de cérium (IV), conduisent à des résultats similaires à ceux obtenus avec la composition témoin T1 qui est dépourvue de sel métallique.
2-c) On a cherché par ailleurs à déterminer les modules et les propriétés à la rupture, ainsi que l'hystérèse de la composition I2 conforme a l'invention en comparaison des compositions témoin T1 et T2, cela après voir appliqué à chaque composition le traitement de vieillissement par thermo-oxydation précité (à une température de 85° C pendant 2 semaines).
Les résultats sont donnés dans le tableau 6 suivant qui montre, pour chaque composition, l'évolution des valeurs des différents paramètres par rapport à celles de la même composition avant ce traitement thermo-oxydant.

**Tableau 6:**

| | T1 | T2 | **I2** |
|---|---|---|---|
| M10 | +46% | +60% | **+75%** |
| M100 | 113% | +129% | **-** |
| Ph | +7 | +8 | **-** |
| Ar | -74% | -79% | **-87%** |
| Cr | -64% | -68% | **-80%** |

En relation avec les résultats du paragraphe 2-b), ce tableau 6 montre que la composition I2 selon l'invention présente une aptitude à la fixation d'oxygène qui est nettement améliorée par rapport aux compositions connues T1 et T2 tout en présentant, suite au traitement thermo-oxydant, des propriétés mécaniques d'allongement et de rupture qui ont évolué dans une mesure pratiquement analogue après traitement thermo-oxydant.
2-d) On a déterminé la quantité d'oxygène fixé dans des compositions non conformes à l'invention contenant des composés du fer (compositions T3 à T5).
On effectue des essais de fixation d'oxygène suite audit traitement de thermo-oxydation qui a été mentionné au paragraphe 2-b).
Les résultats sont donnés dans le tableau 7 qui suit, dont la présentation est analogue à celle du tableau 5 (% en poids d'oxygène fixé).

**Tableau 7:**

| | T1 | T2 | T3 | T4 | T5 |
|---|---|---|---|---|---|
| A 85 °C 2 semaines | 0,9 | 1,1 | 0,9 | 0,9 | 0,9 |

On constate donc que les compositions témoins T3 à T5, qui comportent des composés du fer non conformes à l'invention, ont une aptitude à fixer l'oxygène qui est inférieure à celle de la composition témoin T2 comportant un dérivé de cobalt, et de même niveau que l'aptitude de la composition T1 sans sel métallique.

Il ressort des exemples précités qu'une composition de caoutchouc selon l'invention, c'est-à-dire qui comprend, à l'instar de ladite composition I2, un sel de fer (III) d'un acide carboxylique répondant à la formule brute CₙH₂ₙO₂ où n peut aller de 2 à 5, permet de diminuer considérablement la teneur en métal dans ladite composition par rapport aux compositions connues, tout en améliorant sensiblement les caractéristiques de fixation d'oxygène.

Il ressort également de ces exemples qu'une composition de caoutchouc selon l'invention est caractérisée par des pertes hystérétiques qui sont notablement réduites par rapport à celles des compositions connues.

Il en résulte que l'utilisation dans une enveloppe de pneumatique d'une composition de caoutchouc selon l'invention permet notamment, d'une part, de diminuer d'une manière significative la résistance au roulement de ladite enveloppe et, d'autre part, d'améliorer l'endurance de celle-ci.

Bien entendu, l'invention n'est pas limitée aux exemples précédemment décrits.

## Revendications

1. Produit à base de caoutchouc comportant au moins un renfort métallique ou textile et au moins une couche tampon constituée d'une composition de caoutchouc destinée à piéger l'oxygène extérieur ayant diffusé dans ledit produit pour protéger ledit ou chaque renfort de l'oxydation, **caractérisé en ce que** ladite composition de caoutchouc comprend un sel de fer (III) d'un acide carboxylique de formule brute CₙH₂ₙO₂, où n varie de 2 à 5.

2. Produit à base de caoutchouc selon la revendication 1, **caractérisé en ce que** ledit sel est l'acétate de fer (III).

3. Produit à base de caoutchouc selon la revendication 1, **caractérisé en ce que** ledit sel est le pentanoate de fer (III).

4. Produit à base de caoutchouc selon une des revendications précédentes, **caractérisé en ce que** la quantité dudit sel de fer (III) dans ladite composition de caoutchouc est comprise entre 0,01 et 0,03 pce d'équivalent fer (pce : parties en poids pour cent parties élastomère(s)).

5. Produit à base de caoutchouc selon une des revendications précédentes, **caractérisé en ce que** ladite composition de caoutchouc est à base de caoutchouc naturel ou d'un polyisopréne de synthèse.

6. Procédé d'obtention d'un produit à base de caoutchouc selon une des revendications précédentes, **caractérisé en ce que** la fabrication de ladite ou chaque couche tampon comprend l'incorporation par travail mécanique dudit sel à une matrice élastomère à base de caoutchouc naturel ou d'un polyisoprène de synthèse.

7. Procédé d'obtention selon la revendication 6, **caractérisé en ce que** l'incorporation dudit sel est réalisée en même temps qu'une charge renforçante destinée à renforcer ladite composition de caoutchouc.

8. Enveloppe de pneumatique, **caractérisée en ce qu'**elle est constituée d'un produit à base de caoutchouc selon une des revendications 1 à 5.

9. Enveloppe de pneumatique selon la revendication 8, comportant une gomme intérieure, une nappe carcasse s'étendant de tringle à tringle, des nappes sommet, des flancs se terminant par des bourrelets comportant au moins une tringle et une bande de roulement, **caractérisée en ce que** ladite couche tampon ou l'une au moins d'entre elles occupe l'une des positions suivantes:
radialement à l'intérieur de ladite gomme intérieure, entre ladite gomme intérieure et ladite nappe carcasse, entre ladite nappe carcasse et lesdites nappes sommet, entre lesdites nappes sommet et ladite bande de roulement, entre ladite nappe carcasse et lesdits flancs, dans ou à l'extérieur desdits flancs, dans ou à l'extérieur de ladite bande de roulement.

10. Enveloppe de pneumatique selon la revendication 9, **caractérisée en ce que** ladite couche tampon ou l'une au moins d'entre elles est située entre ladite gomme intérieure et ladite nappe carcasse.

11. Enveloppe de pneumatique selon la revendication 10, **caractérisée en ce qu'**elle est adaptée pour équiper un véhicule véhicule poids-lourd.

12. Procédé de protection contre l'oxydation d'au moins un renfort métallique ou textile d'un produit à base de caoutchouc, **caractérisé en ce qu'**il consiste essentiellement à prévoir au moins une couche tampon constituée d'une composition de caoutchouc et destinée à piéger l'oxygène extérieur ayant diffusé dans ledit produit pour protéger de l'oxydation ledit ou chaque renfort, ladite composition comprenant un sel de fer (III) d'un acide carboxylique de formule brute CₙH₂ₙO₂, où n varie de 2 à 5.

## Claims

1. Product based on rubber, of the type comprising at least one metallic or textile reinforcement and at least one buffer zone constituted by a rubber composition provided in order to trap the external oxygen having diffused into the said product so as to protect said or each reinforcement from oxidation, **characterized in that** the said rubber composition contains an iron (III) salt of a carboxylic acid having the general formula CₙH₂ₙO₂ in which n is from 2 to 5.

2. Product based on rubber according to Claim 1, **characterized in that** the said salt is iron (III) acetate.

3. Product based on rubber according to Claim 1, **characterized in that** the said salt is iron (III) pentanoate.

4. Product based on rubber according to any of the preceding claims, **characterized in that** the quantity of the said iron (III) salt in the said rubber composition ranges from 0.01 to 0.03 percent by weight of iron equivalent.

5. Product based on rubber according to any of the preceding claims, **characterized in that** the said rubber composition comprises natural rubber or synthetic polyisoprene.

6. A process for making a product based on rubber according to any of the preceding claims, **characterized in that** the manufacture of said or each buffer zone comprises the incorporation by mechanical working of said salt (III) into an elastomeric matrice constituting the said rubber composition of the buffer zone.

7. A process according to Claim 6 **characterized in that** the incorporation of the said iron (III) salt is made at the same time as the reinforcing filler is incorporated for reinforcing the said composition.

8. Tyre cover **characterized in that** it is constituted by a product based on rubber according to any of Claims 1 to 5.

9. Tyre cover according to Claim 8 comprising an internal calendering rubber, a carcass ply that extends from one bead wire to the other, crown plies, side walls that end in beads comprising at least one bead wire, and a tread, **characterized in that** the said buffer zone or at least one of said buffer zones occupies at least one of the following positions: radially inside the said internal calendering rubber, between the said calendering rubber and the said carcass ply, between the said carcass ply and the said crown plies, between the said crown plies and the said tread, between the said carcass ply and the said side walls, inside or outside the said side walls, and/or inside or outside the said tread.

10. Tyre cover according to Claim 9, **characterized in that** the said buffer zone or at least one of said buffer zones is provided between the said internal calendering rubber and the said carcass ply.

11. Tyre cover according to Claim 10, **characterized in that** it is suitable for the equipment of heavy duty vehicles.

12. Process for the protection from oxidation of at least one metallic or textile reinforcement based on rubber, **characterized in that** it consists to provide at least one buffer zone based on a rubber and provided in order to trap the external oxygen having diffused into said product so as to protect the said or each reinforcement, the said compensation comprising an iron (III) salt of a carboxylic acid having the general formula CₙH₂ₙO₂, in which n is from 2 to 5.

## Patentansprüche

1. Erzeugnis auf Kautschukbasis, das mindestens eine metallische oder textile Verstärkung und mindestens eine Pufferschicht enthält, die aus einer Kautschukzusammensetzung besteht, die dafür vorgesehen ist, den von außen stammenden Sauerstoff, der in das Erzeugnis diffundiert ist, einzufangen, um die oder jede Verstärkung vor Oxidation zu schützen, **dadurch gekennzeichnet, dass** die Kautschukzusammensetzung ein Eisen(III)-salz einer Carbonsäure der Summenformen CₙH₂ₙO₂, in der n im Bereich von 2 bis 5 liegt, enthält.

2. Erzeugnis auf Kautschukbasis nach Anspruch 1, **dadurch gekennzeichnet, dass** es sich bei dem Salz um Eisen(III)-acetat handelt.

3. Erzeugnis auf Kautschukbasis nach Anspruch 1, **dadurch gekennzeichnet, dass** es sich bei dem Salz um Eisen(III)-pentanoat handelt.

4. Erzeugnis auf Kautschukbasis nach einem der vorhergehenden Ansprüche, **dadurch gekennzeichnet, dass** die Menge des Eisen(III)-salzes in der Kautschukzusammensetzung im Bereich von 0,01 bis 0,03 pce an Eisenäquivalent (pce: Gewichtsteile pro 100 Teile Elastomer(e)).

5. Erzeugnis auf Kautschukbasis nach einem der vorhergehenden Ansprüche, **dadurch gekennzeichnet, dass** die Kautschukzusammensetzung eine Zusammensetzung auf der Basis von Naturkautschuk oder eines synthetischen Polyisoprens ist.

6. Verfahren zur Herstellung eines Erzeugnisses auf Kautschukbasis nach einem der vorhergehenden Ansprüche, **dadurch gekennzeichnet, dass** die Herstellung der oder jeder Pufferschicht das Einarbeiten durch mechanische Arbeit des Salzes in eine Elastomermatrix umfasst, die auf der Basis von Naturkautschuk oder eines synthetischen Polyisoprens ist.

7. Herstellungsverfahren nach Anspruch 6, **dadurch gekennzeichnet, dass** das Einbringen des Salzes gleichzeitig mit dem Einbringen eines verstärkenden Füllstoffs erfolgt, der dafür vorgesehen ist, die Kautschukzusammensetzung zu verstärken.

8. Luftreifen, **dadurch gekennzeichnet, dass** er aus einem Erzeugnis auf Kautschukbasis nach einem der Ansprüche 1 bis 5 besteht.

9. Luftreifen nach Anspruch 8, der ein Innengummi, eine Karkasslage, die sich von Wulstkern zu Wulstkern erstreckt, Scheitellagen, Seitenwände, die durch Wülste, die mindestens einen Wulstkern aufweisen, und einen Laufstreifen begrenzt werden, aufweist, **dadurch gekennzeichnet, dass** die Pufferschicht oder mindestens eine der Pufferschichten eine der folgenden Positionen einnimmt:
radial auf der Innenseite des Innengummis, zwischen dem Innengummi und der Karkasslage, zwischen der Karkasslage und den Scheitellagen, zwischen den Scheitellagen und dem Laufstreifen, zwischen der Karkasslage und den Seitenwänden, in den Seitenwänden oder außerhalb der Seitenwände, in dem Laufstreifen oder außerhalb des Laufstreifens.

10. Luftreifen nach Anspruch 9, **dadurch gekennzeichnet, dass** die Pufferschicht oder mindestens eine der Pufferschichten zwischen dem Innengummi und der Karkasslage angeordnet ist.

11. Luftreifen nach Anspruch 10, **dadurch gekennzeichnet, dass** er für die Ausrüstung eines Schwerlastwagens angepasst ist.

12. Verfahren zum Schutz vor Oxidation mindestens einer metallischen oder textilen Verstärkung eines Erzeugnisses auf Kautschukbasis, **dadurch gekennzeichnet, dass** es im wesentlichen darin besteht, mindestens eine Pufferschicht vorzusehen, die aus einer Kautschukzusammensetzung besteht und die dafür vorgesehen ist, den von außen herrührenden Sauerstoff einzufangen, der in das Erzeugnis diffundiert ist, um die Verstärkung oder alle Verstärkungen vor Oxidation zu schützen, wobei die Zusammensetzung ein Eisen(III)-salz einer Carbonsäure der Summenformel CₙH₂ₙO₂ enthält, in der n im Bereich von 2 bis 5 liegt.
